Europäisches Patentamt

European Patent Office

Office européen des brevets

(19)

(11) Numéro de publication : **0 301 949 B1**

(12) **FASCICULE DE BREVET EUROPEEN**

(45) Date de publication du fascicule du brevet :
**22.01.92 Bulletin 92/04**

(51) Int. Cl.⁵ : **C08L 27/16,** // C08L27:16,
C08L9:02

(21) Numéro de dépôt : **88401925.8**

(22) Date de dépôt : **22.07.88**

(54) **Compositions de polymères comprenant du polyfluorure de vinylidène et un élastomère, leur préparation et leurs utilisations.**

(30) Priorité : **31.07.87 FR 8710970**

(43) Date de publication de la demande :
**01.02.89 Bulletin 89/05**

(45) Mention de la délivrance du brevet :
**22.01.92 Bulletin 92/04**

(84) Etats contractants désignés :
**AT BE CH DE GB IT LI SE**

(56) Documents cités :
**EP-A- 0 138 140**

(73) Titulaire : **INSTITUT FRANCAIS DU PETROLE
4, Avenue de Bois-Préau
F-92502 Rueil-Malmaison (FR)**

(72) Inventeur : **Bré, Anne
10, avenue Jean Jacques Rousseau
F-60330 Le Plessis Belleville (FR)**
Inventeur : **Osgan, Maseh
75, rue de Saussure
F-75017 Paris (FR)**

EP 0 301 949 B1

Jouve, 18, rue Saint-Denis, 75001 PARIS

## Description

L'invention concerne des compositions de polymères comprenant du polyfluorure de vinylidène et au moins un élastomère, ces compositions présentant une flexibilité améliorée ainsi qu'une stabilité améliorée au vieillissement notamment dans le pétrole brut à haute température.

Elle concerne également la préparation de ces compositions, leurs mises en oeuvre notamment par injection ou extrusion et leurs utilisations, notamment dans la confection de tubes flexibles destinés au transport d'hydrocarbures à haute température.

On sait que le polyfluorure de vinylidène présente un certain nombre de propriétés avantageuses, notamment une température de fusion relativement basse (environ 170 à 180°C selon son degré de cristallinité) qui facilite sa mise en forme (par exemple par extrusion) et l'assemblage de pièces par soudage ; il présente en outre une très bonne tenue chimique en présence de nombreux agents, ainsi qu'une excellente tenue thermique. Cependant, son défaut majeur, lié à sa nature cristalline, est sa rigidité élevée qui fait obstacle à son utilisation en structure flexible.

Dans l'art antérieur, on a cherché à remédier cet inconvénient par diverses méthodes de plastification interne (c'est-à-dire par copolymérisation du fluorure de vinylidène avec d'autres monomères apportant la souplesse) ou de plastification externe (c'est-à-dire par incorporation au polymère de divers composés à action plastifiante).

Si la plastification interne du polyfluorure de vinylidène a été étudiée largement, il faut noter qu'elle entraîne un bouleversement profond de la structure de l'homopolymère, qui peut influer de façon importante sur ses propriétés (par exemple abaissement du point de fusion et de la stabilité thermique).

En ce qui concerne la plastification externe du polyfluorure de vinylidène, comme c'est aussi le cas pour le polychlorure de vinylidène, la difficulté rencontrée provient du fait que sa nature fortement cristalline rend incompatible la plupart des plastifiants connus pour les substances polymériques provenant de monomères vinyliques.

On trouve dans l'art antérieur divers documents traitant de la plastification interne du polyfluorure de vinylidène ou de copolymères contenant du fluorure de vinylidène avec d'autres monomères halogéno-oléfiniques.

De façon générale, les composés à action plastifiante de l'art antérieur sont à base d'esters. Il s'agit très souvent de diesters monomériques, ou de polyesters de masse moléculaire moyenne, obtenus par polycondensation d'un acide dicarboxylique aliphatique et d'un diol ou d'un polyol possédant parfois des terminaisons acétylées.

On peut citer par exemple les acétates des polyesters acide adipique/propylène glycol. On trouve également décrits dans certains documents antérieurs des plastifiants de structure fluoroalkylphosphate, ou de type éthers cyanoéthylés.

Le brevet français FR-B-2560884 décrit l'utilisation comme plastifiants du PVDF d'esters de masse molaire d'environ 300 à 1000 formés entre d'une part un acide monocarboxylique aliphatique ou arylaliphatique tel que l'acide heptanoïque ou l'acide benzoïque, et d'autre part un diol tel que le diméthyl-2,2 propanediol-1,3, un polyéthylèneglycol, le propylèneglycol ou un polypropylèneglycol, le tétraméthylèneglycol ou un polytétraméthylèneglycol, ou encore un triol aliphatique tel que le glycérol.

Or, il est apparu que, dans les conditions sévères d'utilisation des conduites flexibles (contact avec le pétrole brut, températures élevées, de l'ordre de 130 à 150°C), les plastifiants à structure ester, qu'ils soient mono ou polymériques, sont soumis dans le temps à un inévitable phénomène d'extraction qui confère à la composition, en association avec d'autres phénomènes strictement dus à la température (effets de recuit, etc...) une évolution défavorable des propriétés au cours du temps (retour à une certaine rigidité, diminution drastique des propriétés d'allongement à la rupture) et donc une fragilité et une mauvaise tenue du matériau à long terme.

Pour minimiser ce phénomène d'extraction du plastifiant, on peut utiliser des composés de masses moléculaires plus élevées. On constate effectivement qu'avec des plastifiants de type ester de masse moléculaire moyenne (comprise entre 1500 et 3000), la cinétique d'extraction est ralentie. Malgré tout, après quelques mois de vieillissement, les valeurs initiales d'allongement à la rupture se trouvent réduites de moitié.

D'autre part, on rencontre des problèmes d'incorporation avec le PVDF si l'on cherche à utiliser des polyesters de masses moléculaires plus importantes.

La littérature décrit l'utilisation d'élastomères pour assouplir certaines résines thermoplastiques, comme par exemple le caoutchouc nitrile pour le polychlorure de vinyle ; le polybutadiène ou le caoutchouc butadiènestyrène pour le polystyrène.

Cependant, l'introduction de ces élastomères a souvent pour but non pas tant d'augmenter la flexibilité du thermoplastique, que d'augmenter la résistance au choc des résines de base qui sont cassantes. On cherche plutôt alors à obtenir une morphologie de type "nodulaire" (phase élastomérique finement dispersée sous forme de nodules dans la matrice thermoplastique).

On trouve cependant dans l'art antérieur des applications pour lesquelles le PVDF se trouve modifié par addition de composés élastomériques.

Ainsi, on a proposé l'incorporation au PVDF d'homo ou de copolymères de (méth)acrylate d'alkyle ou d'acétate de vinyle (par exemple des copolymères éthylène/acétate de vinyle, isobutène/acrylate de méthyle, isobutène/acétate de vinyle) pour améliorer la flexibilité et la transparence du polyfluorure de vinylidène et dans certains cas sa stabilité thermique. Des méthodes de ce type sont décrites notamment dans les documents japonais JP-A-75/92340, JP-A-75/95351, JP-A-75/100148 et JP-A-75/116538 (de Kureha Chemical Industry) et JP-A-85/64827 (de Toray Industry).

Le brevet US-A-4356284 décrit la formation d'un film flexible possédant une stabilité thermique et une résistance à la flamme élevées par addition de polyéthylène chloré.

Les brevets US-A-4090996, US-A-4096204 et US-A-4111894 décrivent la formation de structures polymériques interpénétrées binaires ou ternaires par mélangeage d'un thermoplastique technique tel que le PVDF avec des copolymères blocs type SBS ou SIS (styrène/butadiène/styrène, ou styrène/isoprène/styrène), plus éventuellement un second thermoplastique technique ou un polyester.

Ces compositions présentent des résistances au choc et des températures de déformation à la chaleur améliorées. Toutefois, elles possèdent des élongations à la rupture insuffisantes.

Par ailleurs, les demandes de brevets européens EP-A-0138140 et EP-A-0.194030 font état de compositions "élastomériques" vulcanisables basées sur un élastomère de structure nitrile ou acrylique, contenant de 5 à 60% en poids de PVDF ou d'un copolymère à base de fluorure de vinylidène.

Enfin, la demande française FR-A-2592655 décrit l'incorporation au polyfluorure de vinylidène de particules d'élastomères ou de thermoplastiques élastomériques capables d'absorber les hydrocarbures et de les fixer dans le matériau. L'hydrocarbure absorbé jouerait le rôle de plastifiant. Les élastomères considérés plus particulièrement sont des alkylacrylates élastomères greffés méthylméthacrylate, des polyuréthanne-polyesters, des copolymères EPDM, des polyéther-ester-amides séquencés et des copolymères méthylméthacrylate-butadiène-styrène. Cependant, dans cette technique, il est le plus souvent nécessaire d'incorporer au matériau un plastifiant tel que le sébaçate de dibutyle, ledit plastifiant pouvant avoir initialement une action sur les propriétés mécaniques du matériau, notamment sur son allongement au seuil.

On a maintenant découvert que l'utilisation d'élastomères de type caoutchouc nitrile au moins partiellement hydrogénés permettait de former en mélange avec le polyfluorure de vinylidène des compositions présentant un ensemble de propriétés particulièrement satisfaisant.

Ainsi, l'invention a pour objet des mélanges de polymères qui peuvent être définis comme comprenant une proportion de 70 à 85% en poids d'un polymère de fluorure de vinylidène de masse moléculaire moyenne en poids d'au moins 100000 et une proportion de 30 à 15% en poids, suffisante pour améliorer notamment la souplesse dudit polymère de fluorure de vinylidène, d'au moins un copolymère élastomérique de type butadiène-acrylonitrile au moins partiellement hydrogéné.

Ces copolymères élastomériques présentent une très bonne faculté d'incorporation au polyfluorure de vinylidène. Ils confèrent en outre à la formulation des propriétés mécaniques améliorées par rapport au PVDF pur et qui surtout se trouvent conservées au cours du vieillissement dans le pétrole à haute température. Ces composés présentent par rapport à d'autres élastomères ou élastomères-thermoplastiques une grande facilité d'incorporation au PVDF, conduisent à une flexibilité améliorée (module d'élasticité et contrainte au seuil d'élasticité plus faibles, allongement à la rupture augmenté) qui ne s'altère pas au cours du vieillissement.

Les polyfluorures de vinylidène considérés dans l'invention sont des polymères de cristallinité élevée, pouvant contenir au plus 5% en moles d'un monomère différent, du type halogénoéthylène (par exemple trifluoroéthylène, tétrafluoroéthylène, dichlorodifluoroéthylène ou trifluoroéthylène).

En général, leur masse molaire moyenne en poids peut être aussi élevée que, par exemple, 1500000. Ils peuvent être préparés par polymérisation radicalaire, selon des méthodes classiques.

Les copolymères butadiène-acrylonitrile au moins partiellement hydrogénés considérés dans l'invention dérivent par hydrogénation sélective de copolymères butadiène-acrylonitrile de masse moléculaire moyenne allant de préférence de 10.000 à 300.000 et dont la teneur en motifs acrylonitrile peut aller par exemple de 35 à 45% en mole (la teneur en motifs butadiène allant de 65 à 55% en mole).

L'hydrogénation sélective des copolymères butadiène-acrylonitrile considérés affecte essentiellement les doubles liaisons des motifs dérivant du butadiène, tandis que les groupements nitriles restent intacts. Cette hydrogénation peut être totale (insaturation résiduelle nulle) ou seulement partielle ; dans ce dernier cas, l'insaturation résiduelle est généralement inférieure à environ 10% des motifs dérivant du butadiène (taux d'hydrogénation d'au moins 90%).

De façon générale, le mélange de l'élastomère avec le polyfluorure de vinylidène peut être réalisée par diverses méthodes connues, utilisant les différents instruments de malaxage utilisés couramment dans l'industrie de transformation des caoutchoucs et des plastiques, qui sont par exemple des extrudeuses équipées d'une vis, de deux vis, ou de dipositifs mécaniques spéciaux, ou encore des malaxeurs à cylindres, à pales, etc.

La température mise en jeu est en général comprise entre 170 à 350°C. En effet, le mélange homogène de l'élastomère dans le polyfluorure de vinylidène nécessite de faire fondre totalement les polymères, c'est-à-dire de les porter à une température supérieure à 170°C. Par ailleurs, au cours du mélangeage ou des différents processus de mise en oeuvre, il est important que la température du mélange n'excède pas 350°C, de façon à éviter tout phénomène de décomposition thermique des polymères. Un intervalle préféré va de 180 à 300°C.

Les compositions de polyfluorure de vinylidène de flexibilité accrue, selon l'invention, sont utilisables dans diverses applications qui requièrent des matériaux ayant à la fois une bonne souplesse et un bon comportement au vieillissement notamment au contact de produits pétroliers à température relativement élevée.

Elles conviennent particulièrement bien à la fabrication de pièces moulées par injection ou d'objets extrudés tels que des films, des feuilles, des gaines ou des tubes, notamment des tubes destinés au transport de divers fluides tels que par exemple de l'eau chaude, des produits chimiques ou encore des hydrocarbures.

Les exemples suivants illustrent l'invention ; ils ne doivent en aucune manière être considérés comme limitatifs.

Dans tous ces exemples, on a utilisé un polyfluorure de vinylidène du commerce de masse molaire moyenne en poids d'environ 450000 dont les propriétés mécaniques (mesurées dans des conditions identiques à celles décrites plus loin), sont les suivantes :

```
module élastique          1 700 MPa
contrainte au seuil          54 MPa
allongement au seuil          8%
contrainte à la rupture      40 MPa
allongement à la rupture     30%.
```

Dans ces exemples, on considère des mélanges en diverses proportions de polyfluorure de vinylidène avec plusieurs élastomères de type caoutchouc nitrile hydrogénés, à savoir :
— des produits vendus par BAYER sous les dénominations commerciales "Therban 1707" et "Therban 1907" (produits A et B) ;
— des produits vendus par POLYSAR sous les dénominations commerciales "Tornac 3845", "Tornac 3850" et "Tornac 3855" (produits C, D et E) ; et
— des produits vendus par NIPPON ZEON sous les dénominations commerciales "Zetpol 1010", "Zetpol 1020" et Zetpol 2000" (produits F, G et H).

On a également considéré à titre de comparaison des mélanges en diverses proportions de polyfluorure de vinylidène avec plusieurs élastomères de type caoutchouc nitrile non hydrogénés, à savoir :
— des produits vendus par GOODYEAR sous les dénominations commerciales "Chemigum N 765", "Chemigum HR 665", "Chemigum N 300" et "Chemigum N 206" (produits I, J, K et L).

On indique dans le tableau 1 ci-après la composition (% acrylonitrile — % insaturation) des caoutchoucs nitriles hydrogénés et non hydrogénés A à L, ainsi que certaines de leurs caractéristiques physiques (masse volumique et viscosity Mooney).

On a également utilisé, à titre de comparaison divers plastifiants classiques du PVDF, à savoir :
● un sébaçate de dibutyle vendu par CIBA-GEIGY sous la dénomination commerciale Réomol DBS (produit M) ;
● un polyester de masse moléculaire voisine de 1500, vendu par AKZO sous la dénomination commerciale Estaflex W3 (produit N).

TABLEAU 1  CARACTERISTIQUES DES CAOUTCHOUCS NITRILES

| Produit | Dénomination commerciale | Taux d'ACN (%) | Insaturation (%) | Masse volumique $(g/cm^3)$ | Viscosité Mooney ML1+4 (100°C) |
|---|---|---|---|---|---|
| A | Therban 1707 | 34 | – 0 | 0,95 | 70–75 |
| B | Therban 1907 | 38 | – 0 | 0,95 | 70–75 |
| C | Tornac 3845 | 38 | 5 | 0,97 | 50 |
| D | Tornac 3850 | 38 | 2 | 0,97 | 50 |
| E | Tornac 3855 | 38 | < 0,5 | 0,97 | 55 (125°C) |
| F | Zetpol 1010 | 45 | 5 | 1 | 80 |
| G | Zetpol 1020 | 45 | 10 | 1 | 80 |
| H | Zetpol 2000 | 37 | 1 | 1 | 80 |
| * I | Chemigum N765 | 28 | 100 | ~ 1 | 45–63 |
| * J | Chemigum HR665 | 32 | 100 | ~ 1 | 45–63 |
| * K | Chemigum N300 | 39 | 100 | ~ 1 | 40–60 |
| * L | Chemigum N206 | 45 | 100 | 0,98 | 50–70 |

*  Caoutchoucs nitriles non hydrogénés utilisés à titre de comparaison

**Example 1 Préparation des mélanges**

On prépare les mélange de polyfluorure de vinylidène et du second constituant sur un malaxeur à cylindres dans les conditions opératoires indiquées ci-dessous.

```
Température des cylindres  :  environ 180°C
Vitesse de rotation des cylindres : 15/20
(cylindre avant/cylindre arrière)
Durée du malaxage : 15 minutes.
```

On obtient ainsi une bande malaxée qui est ensuite refondue à l'aide d'une presse de moulage par compression à 190°C sous 200 bars (20 MPa) pendant 5 minutes, puis soumis à un refroidissement lent, pour l'obtention d'une plaque d'épaisseur homogène (environ 2 mm) dans laquelle seront découpés les divers échantillons nécessaires aux caractérisations ultérieures (éprouvettes de traction "haltères" pour la détermination des propriétés mécaniques, rectangles pour les mesures d'extraction).

La composition des divers mélanges réalisés est indiquée dans le tableau 2 ci-après.

**TABLEAU 2**

| Additifs | % poids | E(MPa) | $R_s$(MPa) | s(%) | $R_r$(MPa) | r(%) |
|---|---|---|---|---|---|---|
| néant (PVDF pur) | – | 1700 | 54 | 8 | 40 | 30 |
| CAOUTCHOUCS NITRILE HYDROGENES | | | | | | |
| A (38% poids acrylonitrile) | 10 | 1150 | 31 | 7 | 26 | 150 |
| | 20 | 700 | 21 | 9 | 22 | 250 |
| | 30 | 350 | 12 | 12 | 16 | 220 |
| B (38% poids acrylonitrile) | 10 | 1000 | 29 | 9 | 27 | 230 |
| | 20 | 650 | 19 | 10 | 23 | 290 |
| | 30 | 250 | 11 | 15 | 17 | 300 |
| C (38% poids acrylonitrile) | 10 | 1200 | 35 | 8 | 24 | 120 |
| | 30 | 350 | 12 | 15 | 17 | 290 |
| D (38% poids acrylonitrile | 10 | 1300 | 34 | 8 | 23 | 80 |
| | 30 | 500 | 12 | 12 | 17 | 245 |
| E (38% poids acrylonitrile) | 10 | 1350 | 34 | 8 | 25 | 250 |
| | 30 | 450 | 13 | 14 | 19 | 300 |
| F (45% poids acrylonitrile) | 10 | 1900 | 31 | 7 | 33 | 370 |
| | 30 | 450 | 13 | 14 | 33 | 400 |
| G (45% poids acrylonitrile) | 10 | 1850 | 31 | 8 | 25 | 270 |
| | 30 | 400 | 13 | 13 | 21 | 340 |
| H (38% poids acrylonitrile) | 10 | 1700 | 32 | 7 | 26 | 300 |
| | 30 | 500 | 13 | 11 | 19 | 275 |
| CAOUTCHOUCS NITRILE NON HYDROGENES | | | | | | |
| I (28% poids acrylonitrile) | 10 | 1550 | 30 | 5 | 25 | 110 |
| | 30 | 400 | 9,5 | 13 | 9,5 | 10 |
| J (32% poids acrylonitrile) | 10 | 1250 | 30 | 6,5 | 25 | 50 |
| | 30 | 400 | 10 | 16 | 10 | 15 |
| K (38% poids acrylonitrile) | 10 | 1400 | 36 | 7,5 | 26 | 140 |
| | 30 | 550 | 13 | 12,5 | 10 | 30 |
| L (45% poids acrylonitrile) | 10 | 1300 | 33 | 7 | 30 | 145 |
| | 30 | 550 | 16 | 20 | 16 | 160 |
| PLASTIFIANTS USUELS | | | | | | |
| M (sébaçate de dibutyle) | 10 | 1000 | 32 | 15-20 | 32 | 300 |
| N (polyester) | 10 | 1000 | 39 | 15 | 31 | 300 |

**Exemple 2 Détermination des propriétés mécaniques des mélanges**

On a déterminé les propriétés mécaniques en traction des divers mélanges décrits dans le tableau 2, sur des éprouvettes "haltères" de type $H_2$ de 2 mm d'épaisseur. Les propriétés mécaniques mesurées sont :

- le module d'élasticité        (noté E), exprimé en MPa ;

- la résistance au seuil        (notée $R_s$), exprimée en MPa ;

- l'allongement au seuil        (noté $\varepsilon_s$), exprimé en % ;

- la résistance à la rupture    (notée $R_r$), exprimée en MPa ;

- et l'allongement à la rupture (noté $\varepsilon_r$), exprimé en %.

Les valeurs obtenues sont rassemblées dans le tableau 2 dans lequel on a également rappelé celles qui correspondent au PVDF seul.

De nombreuses méthodes (mesure de la transparence, de la transition vitreuse, des propriétés mécaniques, examen de la morphologie en microscopie...) permettent de représenter l'état d'un mélange de polymères. C'est ainsi que la qualité du mélangeage d'un élastomère avec le PVDF peut s'apprécier par les résultats des propriétés mécaniques en traction et notamment par le critère de l'allongement à la rupture.

Les copolymères non hydrogénés sont moins efficaces pour le PVDF, quelle que soit leur teneur en acrylonitrile. En effet, leur allongement à la rupture est en général plus faible, en particulier pour les mélanges contenant 30% d'élastomère.

Par ailleurs, l'efficacité des plastifiants du type diester ou polyester (produits M et N) est bonne sur le PVDF (ces plastifiants ont été essayés à 10% en poids).

**Exemple 3 Essais de vieillissement dans le pétrole brut à 140°C.**
**Evaluation de la permanence de l'additif (élastomère ou plastifiant externe)**

Les matériaux soumis aux tests consistent en des mélanges de polyfluorure de vinylidène et de chacun des proudits B, C, E, F, H, M et N utilisés en diverses proportions (selon le cas, 10, 15, 20 et 30% en poids par rapport au poids total du matériau).

Les échantillons testés se présentent sous la forme de rectangles de 40 × 30 mm découpés dans des plaques de 2 mm d'épaisseur.

Les échantillons sont placés dans du pétrole brut à une température de 140°C sous une pression de 5 bars (0,5 MPa) d'azote. Le comportement des formulations est évalué au bout du temps indiqué dans le tableau 4 ci-après, par mesure des variations de poids des échantillons.($\Delta$p%).

On observe une extraction importante, s'effectuant avec une cinétique plus ou moins rapide, dans le cas des plastifiants de type diesters ou polyesters (produits M et N). Dans le cas des additifs élastomériques hydrogénés utilisés selon l'invention (produits B, C, E, F et H), on assiste à un gonflement de la composition par le pétrole pratiquement sans extraction de l'élastomère.

8

## TABLEAU 4

### Variations de poids (Δp %)

| Produit | B | | | | C | E | F | H | M | N |
|---|---|---|---|---|---|---|---|---|---|---|
| temps | 10% poids | 15% poids | 20% poids | 30% poids | 30% poids | 20% poids | 20% poids | 20% poids | 10% poids | 10% poids |
| 3 j | − | − | − | − | − | − | − | − | − | − 1,7 |
| 8 j | − | − | − | − | − | − | − | − | − 6,8 | − 3,4 |
| 15j | + 2,7 | + 5,7 | + 7,8 | +12,7 | +11,1 | + 6,9 | + 4,9 | − | − | − 4,5 |
| 1 mois | + 2,9 | + 5,9 | + 7,9 | +12,6 | +11,5 | + 6,7 | + 5 | 0 | − 7 | − 5,3 |
| 2 mois | + 3,4 | + 6,0 | + 8,2 | +12,9 | − | + 7 | − | − | − 7 | − |
| 3 mois | + 3,5 | − | − | − | − | − | − | − | − 7 | − 6 |
| 4 mois | + 3,5 | + 6,3 | − | +13 | +11,4 | − | + 4,9 | 0,45 | − | − |
| 6 mois | + 3,6 | + 6,1 | + 8,1 | +13 | − | − | + 4,9 | 0,45 | − | − |

## Exemple 4 Essais de vieillissement dans le pétrole brut à 140°C Evolution des propriétés mécaniques

On a soumis les mêmes matériaux que dans l'exemple 3 à des essais de vieillissement dans le pétrole brut à 140°C afin de déterminer l'évolution (dans ces conditions de vieillissement) de leurs propriétés mécaniques.

Pour ces essais, les matériaux sont sous la forme d'éprouvettes de traction "haltères" de type $H_2$ de 2 mm d'épaisseur.

Les valeurs obtenues sont indiquées dans le tableau 5, ci-après.

Il apparaît que la flexibilité et les caractéristiques d'allongement à la rupture se détériorent rapidement dans le cas du plastifiant type diester (produit M), ou plus progressivement avec le polyester (produit N), alors que dans les mêmes conditions d'essai les compositions contenant des caoutchoucs nitriles hydrogénés (B, C, E, F, et H) conservent globalement leurs propriétés mécaniques après 3 mois, 4 mois et même 6 mois de vieillissement.

EP 0 301 949 B1

TABLEAU 5

| Produit | B à 10% poids | | | B à 15% poids | | | B à 20% poids | | | B à 30% poids | | | C à 30% poids | E à 20% poids | F à 20% poids | H à 20% poids | M à 10 % poids | | | N à 10 % poids | | |
|---|---|---|---|---|---|---|---|---|---|---|---|---|---|---|---|---|---|---|---|---|---|---|
| temps | E | $R_s$ | $\varepsilon_r$ | E | $R_s$ | $\varepsilon_r$ | E | $R_s$ | $\varepsilon_r$ | E | $R_s$ | $\varepsilon_r$ | $\varepsilon_r$ | $\varepsilon_r$ | $\varepsilon_r$ | $\varepsilon_r$ | E | $R_s$ | $\varepsilon_r$ | E | $R_s$ | $\varepsilon_r$ |
| 0 | 1000 | 29 | 230 | 900 | 24 | 320 | 650 | 19 | 290 | 250 | 11 | 300 | 287 | 328 | 420 | 330 | 1000 | 32 | ~300 | 1000 | 39 | ~300 |
| 15 j | 1000 | 33 | 130 | 800 | 26 | 290 | 500 | 21 | 290 | 250 | 16 | 280 | 330 | 284 | 300 | 290 | 2000 | 44 | 45 | 1600 | 42 | 210 |
| 1 mois | 900 | 32 | 160 | 700 | 25 | 190 | 700 | 22 | 300 | 260 | 16 | 330 | 299 | 312 | 280 | 300 | 2000 | 45 | 40 | 1500 | 44 | 210 |
| 3 mois | 1500 | 32 | 100 | 1000 | 26 | 260 | – | – | – | 290 | 16 | 340 | – | – | – | – | 2000 | 44 | 50 | 1300 | 43 | 180 |
| 4 mois | 1000 | 33 | 90 | 700 | 26 | 180 | – | – | – | 250 | 16 | 370 | 340 | 289 | 284 | 280 | – | – | – | – | – | – |
| 6 mois | 950 | 32 | 140 | 880 | 32 | 340 | 650 | 23 | 350 | 300 | 16 | 330 | – | – | 314 | 279 | – | – | – | – | – | – |

EP 0 301 949 B1

## Revendications

1. Composition de polyfluorure de vinylidène, caractérisée en ce qu'elle comprend un mélange formé entre une proportion de 70 à 85% en poids de polyfluorure de vinylidène de masse moléculaire moyenne en poids d'au moins 100000 et une proportion de 30 à 15% en poids d'au moins un copolymère élastomèrique de type butadiène-acrylonitrile au moins partiellement hydrogéné.

2. Composition selon la revendication 1, caractérisée en ce que ledit copolymère butadiène acrylonitrile hydrogéné présente une masse moléculaire moyenne de préférence comprise entre 10.000 et 300.000.

3. Composition selon l'une des revendications 1 et 2, caractérisée en ce que ledit copolymère butadiène acrylonitrile hydrogéné contient de 65 à 55% en mole de motifs butadiène et de 35 à 45% en mole de motifs acrylonitrile.

4. Composition selon l'une des revendications 1 à 3, caractérisée en ce que le taux d'hydrogénation dudit copolymère butadiène acrylonitrile est d'au moins 90% des motifs butadiène.

5. Composition selon d'une des revendications 1 à 4, caractérisée en ce que ledit polyfluorure de vinylidène a une masse molaire moyenne en poids de 100000 à 1500000.

6. Procédé de préparation d'une composition selon l'une des revendications 1 à 5, caractérisée en ce que ledit mélange est formé par l'incorporation et le malaxage des proportions appropriées de polyfluorure de vinylidène et dudit élastomère à une température de 170 à 350°C.

7. Procédé selon la revendication 6, caractérisé en ce que la température est de 180 à 300°C.

8. Utilisation d'une composition selon l'une des revendications 1 à 5, comme matériau pour la fabrication par extrusion de tubes.

## Patentansprüche

1. Polyvinylidenfluorid-Kompositionen, dadurch gekennzeichnet, daß sie aus einer Mischung bestehen, die aus einem Mengen-anteil von 70-85 Gew.-% an Polyvinylidenfluorid eines mittleren Molekulargewichts von zumindest 100.000 und einem Mengenanteil von 30-15 Gew.-% zumindest eines elastomeren Copolymeren vom Butadien-Acrylnitril- Typ, das zumindest teilweise hydriert ist, gebildet ist.

2. Komposition nach Anspruch 1, dadurch gekennzeichnet, daß das genannte hydrierte Butadien-Acrylnitril-Copolymer ein mittleres Molekulargewicht von vorzugsweise zwischen 10.000 und 300.000 besitzt.

3. Komposition nach Ansprüchen 1-2, dadurch gekennzeichnet, daß das genannte hydrierte Butadien-Acrylnitril-Copolymer 65-55 Mol.-% an Butadienanteilen und 35-45 Mol-% an Acrylnitril-Anteilen enthält.

4. Komposition nach ansprüchen 1-3, dadurch gekennzeichnet, daß der Hydrierungsgrad des genannten Butadien-Acrylnitril-Copolymers zumindest 90% bezüglich der Butadien-Anteile beträgt.

5. Komposition nach Ansprüchen 1-4, dadurch gekennzeichnet, daß das besagte Polyvinylidenfluordid ein mittleres Molekulargewicht von 100.000 bis 1.500.000 besitzt.

6. Verfahren zur Herstellung der Kompositionen gemäß Ansprüchen 1-5, dadurch gekennzeichnet, daß die genannte Mischung durch Inkorporation und durch Vermischen der genannten Anteile an Polyvinylidenfluorid und am genannten Elastomer bei einer Temperatur von 170-350°C gebildet wird.

7. Verfahren nach Anspruch 6, dadurch gekennzeichnet, daß die Verfahrenstemperatur 180-300°C beträgt.

8. Verwendung der Kompositionen nach Anspruch 1-5 als Material zur Herstellung von extrudierten Röhren.

## Claims

1. A polyvinylidene fluoride composition, characterized in that it comprises a mixture formed between a proportion of 70 to 85% by weight of polyvinylidene fluoride having a weight average molecular weight of at least one elastomer copolymer of the butadiene-acrylonitrile type at least partially hydrogenated.

2. A composition according to claim 1, characterized in that said hydrogenated butadiene-acrylonitrile copolymer has an average molecular weight preferably from 10000 to 300000.

3. A composition according to one of claims 1 and 2, characterized in that said hydrogenated butadiene-acrylonitrile copolymer contains 65 to 55% by mole of butadiene recurrent units and 35 to 15% by mole of acrylonitrile recurrent units.

4. A composition according to one of claims 1 to 3, characterized in that the hydrogenation rate of said

11

butadiene-acrylonitrile copolymer is of at least 90% of the butadiene recurrent units.

5. A composition according to one of claims 1 to 4, characterized in that said polyvinylidene fluoride has a weight average molecular weight from 100000 to 1500000.

6. A process for manufacturing a composition according to one of claims 1 to 5, characterized in that said mixture is formed by incorporating and mixing convenient proportions of polyvinylidene fluoride and said elastomer at a temperature of 170 to 350°C.

7. A process according to claim 6, characterized by a temperature range from 180 to 300°C.

8. The use of a composition according to one of claims 1 to 5, as a material for manufacturing tubes by extrusion.